(19) Europäisches Patentamt
European Patent Office
Office européen des brevets

(11) **EP 1 860 750 A2**

(12) **EUROPEAN PATENT APPLICATION**

(43) Date of publication:
**28.11.2007 Bulletin 2007/48**

(51) Int Cl.:
***H02J 3/38*** (2006.01)     ***H02P 9/00*** (2006.01)

(21) Application number: **07010529.1**

(22) Date of filing: **25.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **25.05.2006 JP 2006145536**
         **14.07.2006 JP 2006194605**

(71) Applicants:
• **EBARA CORPORATION**
**Ohta-ku,**
**Tokyo (JP)**
• **EBARA DENSAN LTD.**
**Tokyo 144-8575 (JP)**

(72) Inventors:
• **Kataoka, Tadashi**
**Tokyo (JP)**
• **Sakata, Shigeru**
**Tokyo (JP)**
• **Ozawa, Takahide**
**Tokyo (JP)**
• **Tsukagoshi, Isao**
**Tokyo (JP)**
• **Dai, Zheng**
**Tokyo (JP)**

(74) Representative: **Wagner, Karl H.**
**WAGNER & GEYER**
**Patentanwälte**
**Gewürzmühlstrasse 5**
**80538 München (DE)**

(54) **Electric power supply apparatus and method of synchronously operating power converter**

(57) An electric power supply apparatus includes a distributed power generator such as a gas turbine generator and a power converter such as an inverter apparatus for converting electric power generated by the distributed power generator into AC electric power (alternating-current power) having a required frequency and a required voltage and supplying the AC electric power to a load. The electric power supply apparatus further includes a control unit having output voltage vs. output current characteristics for determining an output voltage corresponding to an output current of the power converter. The output voltage vs, output current characteristics has a first dropping characteristic for causing output electric power of the electric generator to be limited, between a first output current exceeding a power generation capability of the electric generator and a second output current exceeding a power converting capability of the power converter.

*FIG. 3*

EP 1 860 750 A2

**Description**

BACKGROUND OF THE INVENTION

Field of the Invention

The present invention relates to a unitized electric power supply apparatus comprising a distributed power generator such as a gas turbine generator and a power converter such as an inverter apparatus for converting electric power generated by the distributed power generator into AC electric power (alternating-current power) having a required frequency and a required voltage and supplying the AC electric power to a load, and more particularly to an electric power supply apparatus for use in an electric power supply system comprising a plurality of electric power supply apparatuses connected in parallel and operable in a parallel-run mode for supplying electric power to a load disconnected from a commercial power supply system.

Further, the present invention relates to a method of synchronizing output voltages of a plurality of inverter apparatuses (power converters) connected in parallel when the inverter apparatuses are operated in a parallel-run mode to supply three-phase AC electric power to a load disconnected from a commercial power supply system.

Description of the Related Art:

There has been an electric power supply system comprising a plurality of electric power supply apparatuses connected in parallel for supplying generated electric power to a load, each of the electric power supply apparatuses including a voltage-controlled inverter apparatus. In such electric power supply system, even when the voltage controlled inverter apparatuses generate identical voltages, the electric power supply apparatuses fail to output completely identical voltages due to errors of their components including sensors, filter circuits, etc. To solve this problem, there have been some proposals for improving the above electric power supply system comprising a plurality of electric power supply apparatuses including voltage-controlled inverter apparatuses and connected in parallel for supplying generated electric power to a load disconnected from a commercial power supply system. In such proposals, in order to equalize load sharing rates of the plural electric power supply apparatuses, the voltage-controlled inverter apparatuses share mutual information such as currents and powers and control their output voltages based on the shared information to equalize the load sharing rates for thereby effectively utilizing their capabilities. For details, reference should be made to Japanese laid-open utility model publication No. 3-14931 and International publication No. WO2004/019466.

The above load sharing method suffers cost and reliability problems because it requires dedicated hardware for sharing information between the plural electric power supply apparatuses. The information that is shared for electric power control is related only to the information of the inverter apparatuses. If each electric power supply apparatus is of a unitized design which combines an electric generator such as a gas turbine generator or a fuel cell and a power converter such as an inverter apparatus, then before the inverter apparatus is overloaded, the electric generator may be overloaded and thus shut down even though the inverter apparatus is still effectively operable.

Further, there has been an electric power supply system comprising a plurality of voltage-controlled inverter apparatuses connected in parallel for supplying generated electric power to a load disconnected from a commercial power supply system. When the inverter apparatuses supply the generated electric power to the load disconnected from the commercial power supply system, the inverter apparatuses are synchronized according to any one of the following processes:

According to the first process, one of the inverter apparatuses operates as a master unit and outputs a special reference signal synchronous with the voltage output from the master unit to other inverter apparatuses- The inverter apparatuses other than the master unit generate output voltages in synchronism with the reference signal to achieve synchronism between the output voltages.

According to the second process, an external controller sends a phase-locking reference signal to the plural inverter apparatuses, which generate respective output voltages based on the reference signal to synchronize the output voltages.

According to the third process, one of the inverter apparatuses is activated in an autonomous (voltage-controlled) mode to establish a voltage. Thereafter, the other inverter apparatuses are activated in a linked (current-controlled) mode to operate in a parallel-run mode in synchronism with the voltage phase, thereby achieving synchronization between their output voltages.

Heretofore, according to the first and second processes, all the inverter apparatuses are operated in the voltage-controlled mode, and according to the third process, the reference inverter apparatus is operated in the voltage-controlled mode whereas the other inverter apparatuses are operated synchronously in the current-controlled mode. However, these conventional processes are disadvantageous as follows : If all the inverter apparatuses are operated in the voltage-controlled mode according to the first and second processes, then a synchronizing signal is required to synchronize the outputs of the inverter apparatuses. Therefore, in the event of a failure of the inverter apparatus or the external controller which outputs the synchronization signal, the inverter apparatuses cannot continue their operation. Further, because signal lines for transmitting the synchronization signal are required in addition to output lines, the system becomes complex.

In the case where the reference inverter apparatus is operated in the voltage-controlled mode and the other inverter apparatuses are operated in the current-controlled mode according to the third process, no synchronization signal is employed, and thus any signal lines for transmitting the synchronization signal are not required and the problem of the complex system is improved. However, since the reference inverter apparatus needs to be operated in the voltage-controlled mode and the other inverter apparatuses need to be operated in the current-controlled mode, if the reference inverter apparatus operated in the voltage-controlled mode malfunctions, then it becomes difficult for the system to continue its operation, and the inverter apparatuses operated in the current-controlled mode are unable to cope with an abrupt load variation.

For further details, reference should be made to International publication No. WO2004/019466.

SUMMARY OF THE INVENTION

The present invention has been made in view of the above drawbacks. It is therefore a first object of the present invention to provide an electric power supply apparatus for use in an electric power supply system comprising a plurality of unitized electric power supply apparatuses connected in parallel and operable in a parallel-run mode, each of the unitized electric power supply apparatuses comprising an electric generator and a power converter. More specifically, the first object of the present invention is to provide an electric power supply apparatus which is free of dedicated hardware for sharing a load between the electric power supply apparatuses and enables the load sharing rate of each electric generator to be automatically limited within the power generation capability of the electric generator in the case where a load demand exceeds the power generation capability of the electric generator.

A second object of the present invention is to provide a method of synchronously operating a plurality of inverter apparatuses (power converters) connected in parallel in a voltage-controlled mode without the need for a synchronization signal.

In order to achieve the first object, according to a first aspect of the present invention, there is provided an electric power supply apparatus comprising: an electric generator; a power converter for converting electric power generated by the electric generator into AC electric power having a predetermined frequency and a predetermined voltage; and a controller of the power converter including a control unit having output voltage vs. output current characteristics for determining an output voltage corresponding to an output current of the power converted the output voltage vs. output current characteristics having a first dropping characteristic for causing output electric power of the electric generator to be limited, between a first output current exceeding a power generation capability of the electric generator and a second output current exceeding a power converting capability of the power converter.

According to the present invention, without the need for dedicated hardware for sharing information between a plurality of electric power supply apparatuses of an electric power supply system, the controller of the power converter has a control unit for determining an output voltage corresponding to the output current, thereby substantially equalizing load sharing rates of the electric power supply apparatus or positively limiting the load. Specifically, when the output of the power converter reaches an output capability limit of the electric generator, the control unit has a dropping characteristic for causing the output voltage to be dropped at constant electric power (so that the generated electric power will not exceed a limit value), thereby preventing the electric generator from being further loaded. Consequently, before the electric generator is overloaded, the load on the electric power supply apparatus can be limited and can be distributed to other electric power supply apparatus. Therefore, the operation of the electric power supply apparatus is automatically limited within the range of the power generation capability of the electric power supply apparatus and can be continued. Thus, the electric power supply system is reliable as a whole and provides the advantages of low cost.

In a preferred aspect of the present invention, an electric power supply apparatus further comprises: a device for detecting a power generation capability of the electric generator; and a device for setting the first dropping characteristic for causing the output electric power of the electric generator to be limited based on the detected power generation capability

In a preferred aspect of the present invention, the electric generator comprises a gas turbine generator; and an exhaust gas temperature or an inlet air temperature of the gas turbine generator is detected and the first dropping characteristic is set based on the detected temperature.

In a preferred aspect of the present invention, the output voltage vs. output current characteristics has a second dropping characteristic, which is different from the dropping characteristic curve, for causing the output voltage to be lowered as the output current increases, when the output current is not more than the first output current, and a third dropping characteristic, which is different from the first dropping characteristic and the second dropping characteristic, for causing the output voltage to be lowered as the output current increases, when the output current is not less than the second output current.

In a preferred aspect of the present invention, the output voltage vs. output current characteristics has a second dropping characteristic for causing the output voltage to be limited to a constant value as the output current increases, when the output current is not more than the first output current, and a third dropping characteristic, which is different from the first dropping characteristic, for causing the output voltage to be lowered as the output current increases, when the output current is not less than the second output current.

In order to achieve the second object, according to a second aspect of the present invention, there is provided a method of synchronously operating a plurality of power converters connected in parallel in a system for supplying three-phase AC electric power to a load, comprising: detecting three-phase voltages of a power line to which the power converters are connected; transforming the detected three-phase voltages into dq-coordinate components based on an internal phase θ' of each of the power converters to detect a d-axis component Vd'; performing a PI control process to make the d-axis component Vd' zero and outputting a correction variable △f for the internal phase θ'; adding the correction variable △f to an output reference frequency f* of the power converter and also adding a predetermined fluctuation frequency to the correction variable △f to bring the internal phase θ' into agreement with a voltage phase θ of the power line; and controlling the power converter to generate a sine-wave AC voltage based on the internal phase θ' and to synchronize with the three-phase voltages of the power line.

According to the present invention, the internal phase θ' of the power converter can be brought into agreement with the voltage phase θ of the power line for thereby synchronizing the output voltage of the power converter with the AC voltages of the power line. Since all the power converters can be operated in a voltage-controlled mode to produce their output voltages without the need for a synchronizing signal for bringing the phases of the output voltages of the power converters into agreement with each other, all the power converters can be operated in a parallel-run mode to cope sufficiently with load fluctuations simply by connecting the output terminals of the power converters to the power line, without the need for any special signal lines for synchronizing the output voltages of the power converters.

In a preferred aspect of the present invention, the predetermined fluctuation frequency is represented by an output value from a proportional control unit.

In a preferred aspect of the present invention, the predetermined fluctuation frequency is represented by an output frequency from a disturbance generator.

According to a still further aspect of the present invention, there is provided a power converter for use in an electric power supply system comprising a plurality of power converters connected in parallel for supplying three-phase AC electric power to a load, the power converter comprising: a voltage detector for detecting three-phase voltages of a power line to which the power converters are connected; a processor for transforming the detected three-phase voltages detected by the voltage detector into dq-coordinate components based on an internal phase θ' of each of the power converters to detect a d-axis component Vd; a PI processor for making the d-axis component Vd' zero as an error phase difference ε and outputting a correction variable Δf for the internal phase θ'; a limiter for limiting an output of the PI processor, a fluctuation frequency generator for generating a predetermined fluctuation frequency; an adder for adding an output of the limiter, an output reference frequency f* of the power converter, and an output of the fluctuation frequency generator to each other; and an integrator for integrating an output from the adder and outputting the internal phase θ'; wherein the power converter outputs a sine-wave AC voltage in synchronism with the three-phase voltages of the power line based on the internal phase θ' which is in agreement with a voltage phase θ of the power line.

In a preferred aspect of the present invention, the fluctuation frequency generator comprises a proportional control unit.

In a preferred aspect of the present invention, the fluctuation frequency generator comprises a disturbance generator for outputting the predetermined fluctuation frequency.

According to a still further aspect of the present invention, there is provided a power converter for use in an electric power supply system comprising a plurality of power converters connected in parallel for supplying three-phase AC electric power to a load, the power converter comprising: a voltage detector for detecting three-phase voltages of a power line to which the power converters are connected; and a switch for connecting the power converter to the power line; wherein if the voltage detector detects no voltage of the power line, the switch is closed to output an AC voltage having a reference frequency from the power converter; and if the voltage detector detects the three-phase voltages of the power line, a phase of a voltage of the power converter is adjusted into agreement with a phase of the three-phase voltages of the power line, and if the difference between the phase of the voltage of the power converter and the phase of the three-phase voltages of the power line falls in a predetermined value, the switch is closed.

The above and other objects, features, and advantages of the present invention will become apparent from the following description when taken in conjunction with the accompanying drawings which illustrate preferred embodiments of the present invention by way of example.

BRIEF DESCRIPTION OF THE DRAWINGS

FIG. 1 is a block diagram showing an electric power supply apparatus according to an embodiment of the present invention;

FIG. 2 is a block diagram showing an electric power supply system comprising a plurality of electric power supply apparatuses, each of which is shown in FIG. 1, connected in parallel and operable in a parallel-run mode;

FIG. 3 is a graph showing output voltage vs. output current characteristics of the electric power supply apparatus shown in FIG. 1;

FIG. 4 is a graph showing output voltage vs. output current characteristics of an electric power supply apparatus according to another embodiment of the present invention;

FIG. 5 is a graph showing output voltage vs. output current characteristics of an electric power supply system according to a first embodiment of the present invention;

FIG. 6 is a graph showing output voltage vs. output current characteristics of an electric power supply system according to a second embodiment of the present invention;

FIG. 7 is a block diagram showing an electric power supply apparatus incorporating an inverter apparatus according to another embodiment of the present invention;

FIG. 8 is a block diagram showing an electric power supply system comprising a plurality of electric power supply apparatuses, each of which is shown in FIG. 7, connected in parallel and operable in a parallel-run mode;

FIG. 9 is a block diagram showing a phase controller of the inverter apparatus according to the present invention;

FIG. 10 is a diagram showing dq coordinate transformation;

FIG. 11A is a block diagram showing a phase controller according to a modification of FIG. 9;

FIG. 11B is a block diagram showing a phase controller according to another modification of FIG. 9;

FIG. 12 is a flowchart showing a former part of an operation sequence of the inverter apparatus according to the present invention;

FIG. 13 is a flowchart showing a latter part of the operation sequence of the inverter apparatus according to the present invention; and

FIG. 14 is a diagram showing various waveforms illustrative of the operation sequence of the inverter apparatus according to the present invention.

DETAILED DESCRIPTION OF THE PREFERRED EMBODIMENTS

An electric power supply apparatus according to embodiments of the present invention will be described in detail below with reference to the accompanying drawings. The same or corresponding members or elements are denoted by the same reference numerals throughout views and will not be described repetitively.

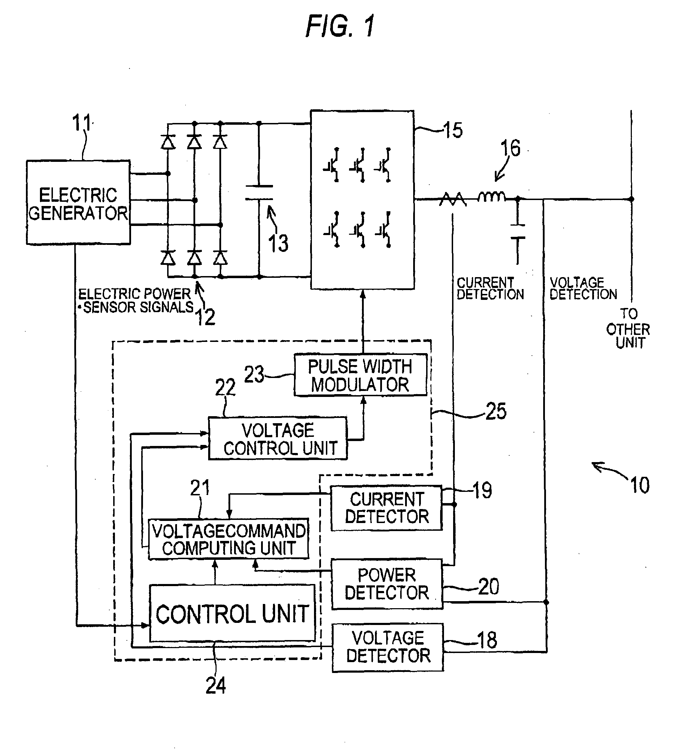

FIG. 1 shows an electric power supply apparatus according to an embodiment of the present invention. As shown in FIG. 1, an electric power supply apparatus, generally denoted by 10, has an electric generator 11 in the form of a distributed electric generator such as a gas turbine generator, for example. AC electric power (alternating-current power) generated by the electric generator 11 is rectified by a converter 12 such as a full-wave rectifying circuit into DC electric power (direct-current power) which is stored in a capacitor (DC power supply) 13 and is then converted by an inverter 15 into AC electric power (alternating-current power) having a required frequency and a required voltage. The AC electric power is supplied to a filter circuit 16, which removes harmonic contents from the AC electric power, and is then supplied to a load connected to an output side of the electric power supply apparatus 10. The electric generator 11 may comprise another distributed electric generator such as a solar cell or a fuel cell.

The inverter 15 constitutes a voltage-controlled inverter apparatus for converting the DC electric power from the DC power supply 13 into AC electric power having a frequency and a voltage based on command values. The inverter 15 has a plurality of power switching elements that are selectively turned on and off by a pulse width modulation signal for converting DC electric power into AC electric power. The inverter apparatus (power converter) has various types of sensors and control units associated with the inverter 15. Such sensors and control units include a voltage detector 18 for detecting an output voltage from the inverter 15, a current detector 19 for detecting an output current from the inverter 15, a power detector 20 for detecting an output power from the inverter 15, a voltage command computing unit 21 for computing a voltage command value based on command values for a frequency and a voltage and feedback values detected by the above detectors 18, 19 and 20, a voltage control unit 22, and a pulse width modulator 23 for generating a pulse width modulation signal for performing on-off control of the power switching elements of the inverter 15.

The electric power supply apparatus 10 is of a unitized structure including the electric generator 11 and the power converter comprising the inverter apparatus for converting electric power generated by the electric generator 11 into AC electric power having a required frequency and a required voltage. For example, the electric generator 11 may be an electric generator having a capability for generating electric power of 100 kW, and the power converter may be a voltage-controlled inverter apparatus for converting the electric power generated by the electric generator into AC electric power having a frequency and a voltage of a commercial power supply system. The electric generator 11 and the power converter are unitized and housed in a single housing (package). The user may have a single electric power supply apparatus 10 for outputting a maximum of 100 kW of AC electric power having the same frequency and voltage as those of the commercial power supply system, to a load that can be connected to the commercial power supply system.

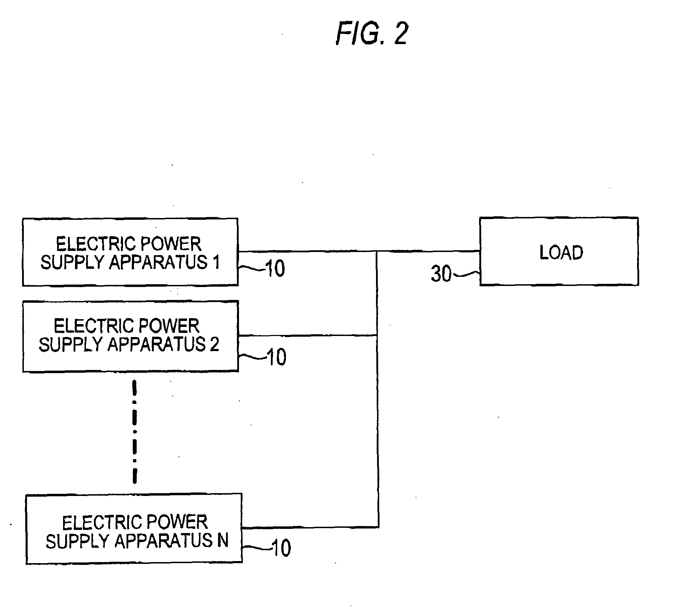

The users of the electric power supply apparatus have a diversity of electric power requirements. To meet such electric power requirements, it has been customary to connect a plurality of electric power supply apparatuses 10 in parallel and operate them in a parallel-run mode, as shown in FIG. 2. For example, if N electric power supply apparatuses 10 of identical specifications are connected in parallel and operated in a parallel-run mode, they can supply electric power having an amount of electric power which is N times the amount of electric power per each electric power supply apparatus 10, to a load 30.

Each of the electric power supply apparatuses 10 includes a control unit 24 having output voltage vs. output current characteristics for determining an output voltage corresponding to the output current from the inverter apparatus and automatically controlling the electric power supply apparatus 10 to share the load while the electric power supply apparatuses 10 are operating in the parallel-run mode. The voltage command computing unit 21, the voltage control unit 22, the pulse width modulator 23, and the control unit 24 jointly make up a controller 25. The output voltage determined by the control unit 24 is applied to the voltage command computing unit 21. Since the electric power supply apparatuses 10 have respective output terminals connected in parallel, the control units 24 for commanding identical output voltages with respect to the identical output currents, which are provided in the respective electric power supply apparatuses 10, are effective to substantially equalize the load sharing rates of the electric power supply apparatuses 10. If the electric power supply apparatuses 10 are controlled to produce different output currents under the same output voltage, then the electric power supply apparatuses 10 can positively have different load sharing rates. Therefore, the load sharing rates of the electric power supply apparatuses 10 can automatically be substantially equalized or be positively differentiated without the need for dedicated hardware for sharing information of the electric power supply apparatuses 10.

When the control unit determines an output voltage command value for a voltage-controlled inverter apparatus, it is customary to determine an output voltage only in consideration of weather the output current or output power of the inverter apparatus falls in a rated capacity range thereof or not.

If the inverter apparatus having this type of control unit is combined with the electric generator to construct an electric power supply apparatus, then when the power generation capability of the electric generator is greater than the output capability of the inverter apparatus, no problem arises on condition that the electric generator is operated within the output capability of the inverter apparatus. However, when the power generation capability of the electric generator is smaller than the output capability of the inverter apparatus, the electric generator may be overloaded before the output capability (normally, the rated capacity range) of the inverter apparatus is reached, and a safety device is activated to shut down the entire electric power supply apparatus.

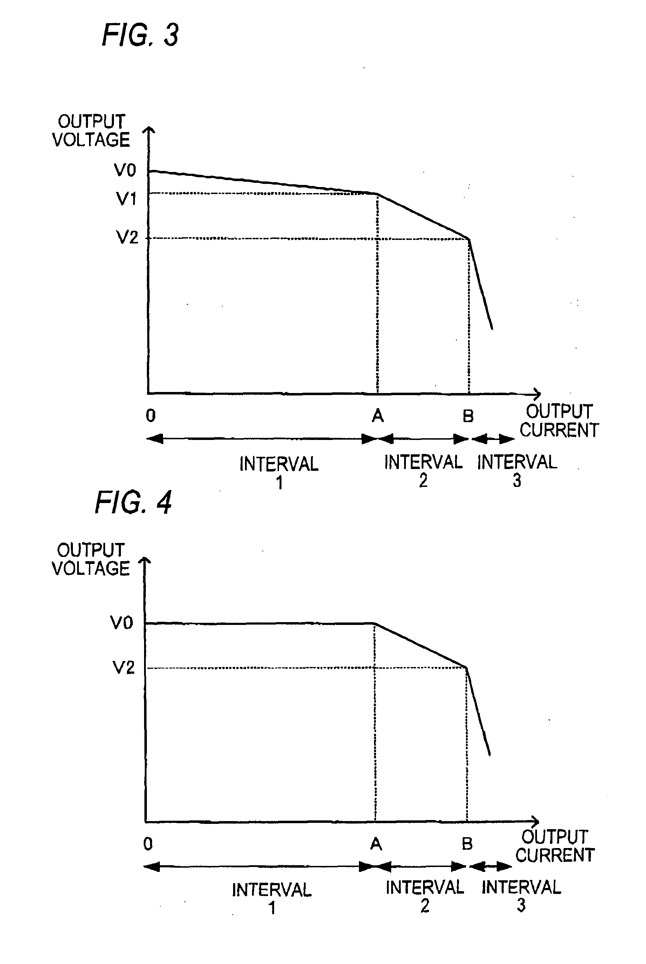

In order to solve the above problem, according to the electric power supply apparatus of the present invention, the control unit 24 of the controller 25 for the inverter apparatus (power converter) is given an output voltage vs. output current control characteristics shown in FIG. 3. Specifically, the output voltage vs. output current characteristics has a first dropping characteristic between an output current A (first output current) greater than the power generation capability of the electric generator 11 and an output current B (second output current) greater than the conversion capability of the inverter apparatus (i.e. in interval 2), a second dropping characteristic at a value smaller than the output current A (i.e. in interval 1), and a third dropping characteristic at a value greater than the output current B (i.e. in interval 3).

The dropping characteristic (the output voltage vs. output current characteristics) can be realized by storing a table or function of output currents of the inverter apparatus and corresponding output voltages of the inverter apparatus in a memory of the control unit 24, detecting an output current of the inverter apparatus, and referring to the table or function with a CPU of the control unit 24 to determine an output voltage command value based on the detected output current.

In the interval 1 shown in FIG. 3, the output voltage vs. output current characteristics has the second dropping characteristic showing a gradual drop (mild lowering) from the output voltage V0 to the output voltage V1 as the output current increases up to the output current A exceeding the power generation capability of the electric generator 11.

FIG. 4 shows an output voltage vs. output current characteristics, which is a modification of the output voltage vs. output current characteristics shown in FIG. 3. According to the output voltage vs. output current characteristics shown in FIG. 4, in the interval 1, the output voltage is constant (V0) regardless of the output current as the output current increases up to the output current A exceeding the power generation capability of the electric generator 11.

When the output current of the inverter apparatus increases beyond the output current A, in the interval 2, the output voltage vs. output current characteristics has the first dropping characteristic showing a drop of the output voltage while keeping the generated electric power constant, so that the electric generator 11 will not undergo a load greater than its limit capability. Specifically, the output power of the electric generator 11 is limited to a constant level. When the output current further increases beyond the output current B exceeding the conversion capability of the inverter apparatus, in the interval 3, the output voltage vs. output current characteristics has the third dropping characteristic showing a sharp drop (lowering) of the output voltage as the output current increases, so that the power converter will not undergo a load greater than its limit capability.

In each of the intervals 2 shown in FIGS. 3 and 4, according to the dropping characteristic of constant generated electric power, the product of the output current and the output voltage of the inverter apparatus is not greater than a predetermined value. In the interval 2, when the output current of the electric power supply apparatus increases, the output voltage thereof decreases, and hence the electric power generated by the electric generator 11 is limited. If a plurality of electric power supply apparatuses are connected in parallel, then they output a common output voltage and their output currents are determined by the respective output voltage vs. output current characteristics. In the interval corresponding to the first dropping characteristic, the electric power supply apparatus is operated at the output capability limit of the electric generator 11. When the load exceeds the output capability limit of the electric generator, electric power is supplied from other electric power supply apparatuses. Therefore, without the need for dedicated hardware for sharing information for distributing the load between the electric power supply apparatuses operated in the parallel-run mode, the load is distributed to other electric power supply apparatuses before the electric generator 11 is overloaded. Consequently, the electric power supply apparatus can be continuously operated stably, and provide the advantage of cost and reliability.

In the case where the electric generator 11 of each of the electric power supply apparatuses comprises a gas turbine generator, the power generation capability limit value of the gas turbine generator is strongly affected by the exhaust gas temperature (EGT) or the inlet air temperature, and is thus determined by these temperatures. A controller of the gas turbine generator determines a power generation capability limit value that can be outputted in a safe operation range of the gas turbine generator from the exhaust gas temperature or the inlet air temperature, and transmits the determined power generation capability limit value to the controller 25 for controlling the inverter apparatus. The control unit 24 of the controller 25 controls the inverter apparatus on the basis of the transmitted power generation capability limit value utilizing the dropping characteristic in the interval 2. Therefore, the electric power supply apparatus includes a device for detecting the power generation capability of the electric generator 11 and a device for setting the dropping characteristic in the interval 2 on the basis of the detected power generation capability.

As described above, the control based on the dropping characteristic is performed by referring to the output voltage vs. output current characteristics as the table or function based on the detected output current by the current detector 19 to output a voltage command value and to control the inverter apparatus based on the voltage command value. Therefore, the device for setting the dropping characteristic in the interval 2 based on the detected power generation capability is capable of setting the range of the interval 2 from the output current A at the power generation capability limit value of the electric generator 11 and the output current (rated current) B that can be outputted from the inverter apparatus, and is capable of setting the gradient of the output voltage vs. output current characteristics from the output power at the power generation capability limit value of the electric generator 11.

In each of the intervals 3 shown in FIGS. 3 and 4, the output voltage vs. output current characteristics has the dropping characteristic showing a sharp drop of the output voltage as the output current increases at not less than the output current exceeding the power converting capability of the power converter (inverter apparatus). Therefore, the electric power supply apparatus is operated at the output capability limit of the power converter, and when the load exceeds the output capability limit, the electric power is supplied from the other electric power supply apparatuses.

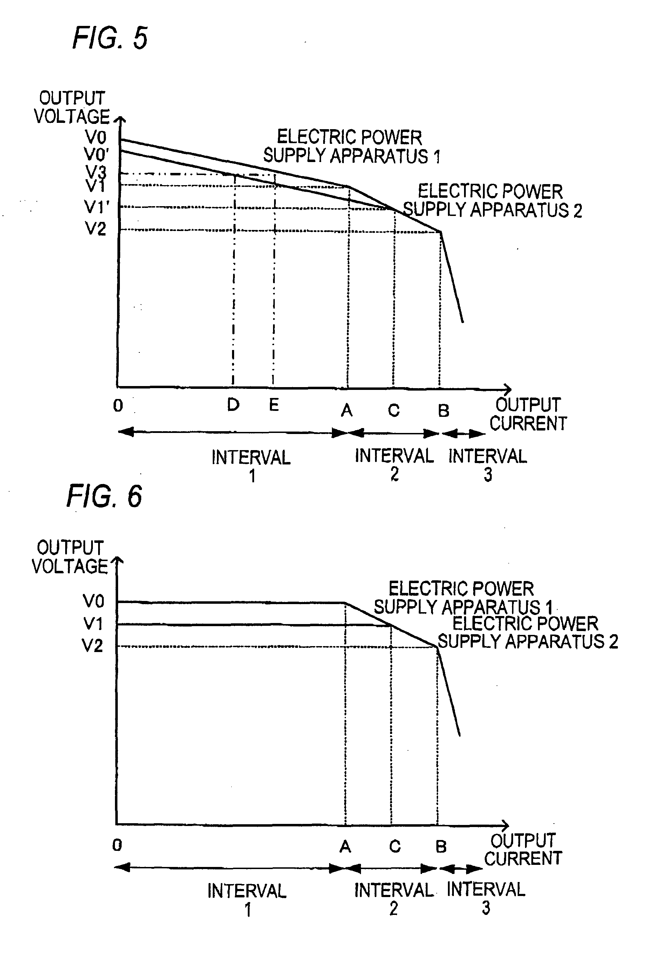

An electric power supply system according to a first embodiment of the present invention will be described below with reference to FIG. 5. The electric power supply system according to the first embodiment comprises two electric power supply apparatuses 1, 2 operable in a parallel-run mode, and each of the electric power supply apparatuses has the dropping characteristic in the interval 1 shown in FIG. 3. When the electric generators of the electric power supply apparatuses have excess power generation capability, the load sharing rates of the electric power supply apparatuses are kept to be substantially equalized while the electric power supply apparatuses are operating in the parallel-run mode. When the power generation capability of the electric generator reaches its limit, the output power is limited to prevent the electric generator from being overloaded, and another electric power supply apparatus is controlled to increase its load sharing rate.

The electric power supply apparatus 1 outputs a predetermined voltage (e.g., a rated voltage) V0 at the time of no load (output current is 0). The electric power supply apparatus 2 also outputs a predetermined voltage V0 at the time of no load. Actually, however, the electric power supply apparatus 2 produces an output voltage V0' due to errors of sensors, filter circuits and the like, the output voltage V0' being different from the predetermined voltage V0 by a slight quantity (e.g., about 0.5 % of the rated voltage).

The electric power supply apparatus 1 has the mild dropping characteristic in the interval 1 up to the output current A at the power generation capability limit of the electric generator 11, the dropping characteristic for keeping the generated power of the electric generator 11 constant in the interval 2 from the output current A up to the output current B at the output capability limit of the inverter apparatus, and the sharp dropping characteristic in the interval 3 beyond the output current B. The electric power supply apparatus 2 has the mild dropping characteristic in the interval 1 up to the output current C at the power generation capability limit of the electric generator 11, the dropping characteristic for keeping the generated power of the electric generator 1.1 constant in the interval 2 from the output current C up to the output current B at the output capability limit of the inverter apparatus, and the sharp dropping characteristic in the interval 3 beyond the output current B. As described above, since the output power is controlled so as to be a predetermined value or less by the dropping characteristic in the interval 2, it is possible to keep the output power from the electric power supply apparatus within the range of the power generation capability of the electric generator 11.

When the two electric power supply apparatuses operated in a parallel-run mode produce an output voltage V3 in the interval 1, the electric power supply apparatus 1 shares an output current E and the electric power supply apparatus 2 shares an output current D. If any output voltage difference between the electric power supply apparatus 1 and the electric power supply apparatus 2 is caused by a voltage difference due to errors of sensors, filter circuits and the like, then the output current E and the output current D are approximately close to each other, and hence the electric power supply apparatus 1 and the electric power supply apparatus 2 can have substantially identical load sharing rates. When the output current of the electric power supply apparatus 1 reaches the power generation capability limit (the output current A) of the electric generator 11, the output voltage vs. output current characteristics enters the dropping characteristic in the interval 2, and the output power is controlled so as to be limited to the power generation capability limit to prevent the electric power supply apparatus 1 from being overloaded. Thus, the electric power supply apparatus 2 is controlled to increase its load sharing rate. When the output current of the electric power supply apparatus 2 reaches the power generation capability limit (the output current C) of the electric generator 11, the output voltage vs. output current characteristics enters the dropping characteristic in the interval 2, and the output power is controlled so as to be limited to the power generation capability limit to prevent the electric power supply apparatus 2 from being overloaded. When a load current exceeding the output capability (the rated current) B of the inverter apparatus is required, the output voltage vs. output current characteristics enters the dropping characteristic in the interval 3, and the output voltage is sharply dropped to prevent the inverter apparatus from being overloaded. If there is another electric power supply apparatus operated in the parallel-run mode, then such electric power supply apparatus supplies electric power to the load.

In the above first embodiment, while the electric generator 11 has excess power generation capability, the load sharing rates of the electric power supply apparatuses are kept to be substantially equalized. When the power generation capability of the electric generator 11 reaches its limit, the output power is limited to prevent the electric generator from being overloaded, and the load sharing rate of another electric power supply apparatus is increased. However, if the load sharing rates of the plural electric power supply apparatuses are to be positively changed, e.g., if one of two electric power supply apparatuses preferentially supplies electric power to the load, then the output voltage vs. output current characteristics of the electric power supply apparatuses are differentiated from each other in advance for causing the electric power supply apparatus with the higher output voltage to preferentially supply electric power to the load. Further, when the power generation capability limit of the electric generator 11 is reached, the output voltage is dropped to make the electric power constant, i.e., to prevent the electric power from exceeding the electric power limit. Thus, the electric power supply apparatus is not shut down, and the other electric power supply apparatus is controlled to supply electric power to the load.

An electric power supply system according to a second embodiment of the present invention will be described below with reference to FIG. 6. The electric power supply system according to the second embodiment comprises two electric power supply apparatuses 1, 2 operable in a parallel-run mode. The electric power supply apparatus 1 has the dropping characteristic for keeping the output voltage constant in the interval 1 up to the output current A at the power generation capability limit of the electric generator 11, the dropping characteristic in the interval 2 for causing the electric power generated by the electric generator to be limited up to the output current B at the output capability limit of the inverter apparatus, and the sharp dropping characteristic in the interval 3 for causing the output voltage to be sharply dropped beyond the output current B at the output capability limit of the inverter apparatus. The electric power supply apparatus 2 has the characteristic for keeping the output voltage constant in the interval 1 up to the output current C at the power generation capability limit of the electric generator 11, the dropping characteristic in the interval 2 for keeping the generated power of the electric generator constant up to the output current B at the output capability limit of the inverter apparatus, and the sharp dropping characteristic in the interval 3 for causing the output voltage to be sharply dropped beyond the output current B at the output capability limit of the inverter apparatus. As described above, the output power is controlled so as to be limited to a predetermined value or less by the dropping characteristic in the interval 2.

In the interval 1 up to the output current A at which the output current is determined by the power generation capability limit of the electric generator 11, the output voltages (command values) of the electric power supply apparatus 1 and the electric power supply apparatus 2 are made constant as V0 (actual output voltages are different due to errors of their components including sensors, filter circuits, etc.), thereby substantially equalizing the load sharing rates of the electric power supply apparatuses 1, 2 operated in the parallel-run mode. Although the output voltages (command values) are constant in the interval 1, because a voltage drop is produced by the filter 16 composed of the coil L and the capacitor C which are connected between the output terminal of the inverter 15 and the output terminal of the entire electric power supply apparatus, the voltage at the output terminal decreases as the output current increases, thereby substantially equalizing the load sharing rates.

In the interval 1 up to the output current A at which the output current is determined by the power generation capability limit of the electric generator 11, the output voltages (command values) of the electric power supply apparatus 1 and the electric power supply apparatus 2 may be differentiated from each other. When the electric power supply apparatus 1 and the electric power supply apparatus 2 produce output voltages (command values) V0, V1, the electric power supply apparatus having the higher output voltage (command value) may preferentially supply electric power to the load.

When the load current increases until the output power exceeds the power generation capability limit (the output current A) of the electric generator 11, the generated electric power is controlled to be constant to prevent the electric generator 11 from being overloaded in the interval up to the output capability limit (the output current B) of the inverter apparatus, thereby lowering the output voltage to cause other electric power supply apparatus to supply electric power to the load. When the load current further increases until the output current exceeds the output capability limit (the output current B) of the inverter apparatus, the output voltage is sharply dropped (in the interval 3) to prevent the inverter apparatus from being overloaded and to cause other electric power supply apparatus to supply electric power to the load. This operation is the same as that of the electric power supply system according to the first embodiment.

In the above embodiment, the controller of the electric generator 11 determines an output power value at the power generation capability limit of the electric generator 11. However, the controller 25 of the power converter (inverter apparatus) may receive information of the exhaust gas temperature or the inlet air temperature, calculate a generated electric power limit value based on the received information, and use the calculated value for control. Although the gas turbine generator has been described in the above embodiments, a distributed electric generator such as a gas engine, a fuel cell, a water turbine or a solar cell may determine a power generation capability limit value depending on the operating environment, transmit the determined power generation capability limit value to the controller of the power converter, and set the dropping characteristic in the interval 2. Accordingly, the present invention is also applicable to an electric power supply apparatus including such a distributed electric generator.

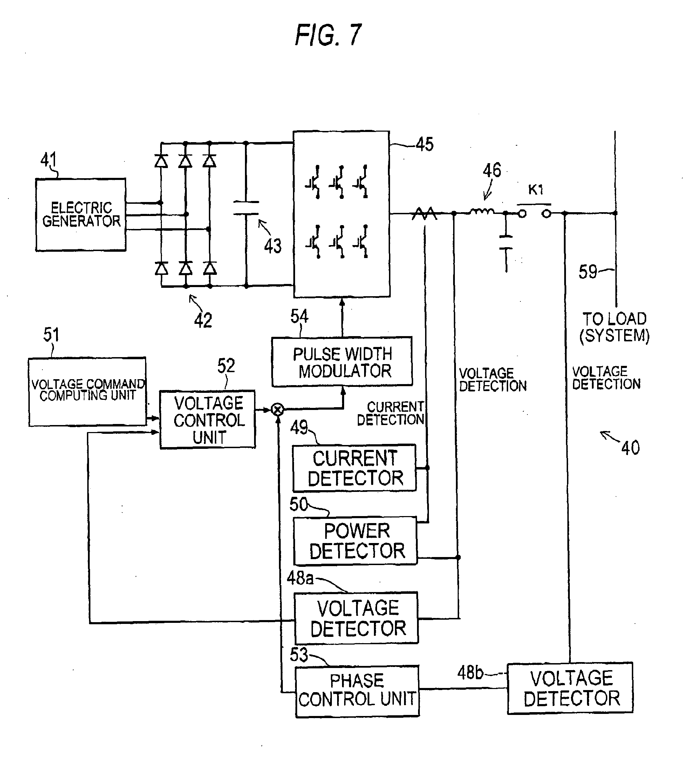

FIG. 7 shows an electric power supply apparatus incorporating an inverter apparatus device according to another embodiment of the present invention. As shown in FIG. 7, an electric power supply apparatus, generally denoted by 40, has an electric generator 41 in the form of a distributed electric generator such as a gas turbine generator, for example. AC electric power (alternating-current power) generated by the electric generator 41 is rectified by a converter 42 such as a full-wave rectifying circuit into DC electric power (direct-current power) which is stored in a capacitor (DC power supply) 43 and is then converted by an inverter 45 into AC electric power (alternating·current power) having a required frequency and a required voltage. The AC electric power is supplied to a filter circuit 46, which removes harmonic contents from the AC electric power, and is then supplied to a load connected to an output side of the electric power supply apparatus 40. The electric generator 41 may comprise another distributed electric generator such as a solar cell or a fuel cell.

The inverter 45 constitutes a voltage-controlled inverter apparatus for converting the DC electric power from the DC power supply 43 into AC electric power having a frequency and a voltage based on command values. The inverter 45 has a plurality of power switching elements that are selectively turned on and off by a pulse width modulation signal for converting DC electric power into AC electric power. The inverter apparatus (power converter) has various types of sensors and control units associated with the inverter 45. Such sensors and control units include a voltage detector 48a for detecting an output voltage from the inverter 45, a voltage detector 48b for detecting a voltage of a power line 59 to which a load is connected, a current detector 49 for detecting an output current from the inverter 45, a power detector 50 for detecting an output power from the inverter 45, a voltage command computing unit 51 for computing a voltage command value based on the output current or the like of the inverter 45, a voltage control unit 52 for controlling the output voltage of the inverter 45, a phase control unit 53 for controlling the output phase of the inverter 45, and a pulse width modulator 54 for generating a pulse width modulation signal for performing on-off control of the power switching elements of the inverter 45.

The electric power supply apparatus 40 is of a unitized structure including the electric generator 41 and the inverter apparatus (power converter) which converts the electric power generated by the electric generator 41 into AC electric power having a required frequency and a required voltage. For example, the electric generator 41 may be an electric generator having a capability for generating electric power of 100 kW, and the inverter apparatus may be a voltage-controlled inverter apparatus for converting the electric power generated by the electric generator 41 into AC electric power having a frequency and a voltage of a commercial power supply system. The electric generator 41 and the voltage-controlled inverter apparatus are unitized and housed in a single housing (package). The user may have a single electric power supply apparatus 40 for outputting a maximum of 100 kW of AC electric power having the same frequency and voltage as those of the commercial power supply system, to a load that can be connected to the commercial power supply system.

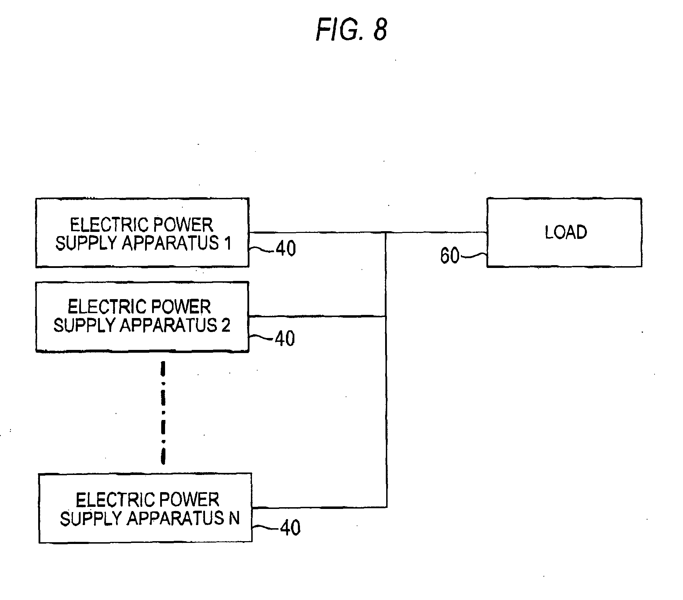

The users of electric power supply apparatus have a diversity of electric power requirements. To meet such electric power requirements, it has been customary to connect a plurality of electric power supply apparatuses 40 in parallel and operate them in a parallel-run mode, as shown in FIG. 8. For example, if N electric power supply apparatuses 40 of identical specifications are connected in parallel and operated in a parallel-run mode, they can supply electric power having an amount of electric power which is N times the amount of electric power per each electric power supply apparatus 40, to a load 60.

When the unitized electric power supply apparatuses 40 are connected in parallel for operation in the parallel-run mode, the outputs from the inverter apparatuses of the electric power supply apparatuses 40 need to be synchronized with each other. For such synchronized operation, each of the electric power supply apparatuses 40 has the voltage detector 48b for detecting the voltage of the power line 59 and the phase control unit 53. By the phase control unit 53, the phase of the waveform (sine wave) of the output voltage of the inverter apparatus is brought in agreement with the phase of the waveform of the voltage of the power line 59, i.e., the synchronization is performed. In this manner, all the inverter apparatuses can be operated to produce their outputs in the voltage-controlled mode without the need for a synchronization signal for synchronizing the phase of the output voltages of the inverter apparatuses. Therefore, it is not necessary to connect the inverter apparatuses by a special signal line for synchronizing the output voltages of the inverter apparatuses, but the electric power supply apparatuses 40 can be operated in the parallel-run mode for coping with load variations simply by connecting the output terminals of the inverter apparatuses to the power line 59.

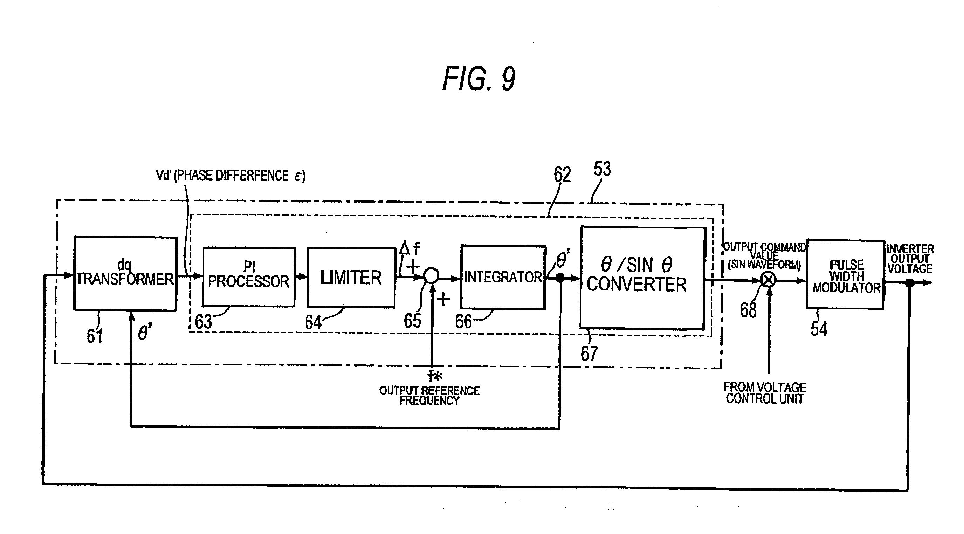

As shown in FIG. 9, the phase control unit 53 comprises a dq transformer 61 for converting three-phase voltages detected by the voltage detector 48b into dq coordinate components based on a phase $\theta'$ in the inverter apparatus, and a phase adjuster 62 for adjusting the phase $\theta'$ in the inverter apparatus by a feedback control in order to eliminate a d·axis component Vd' transformed by the dq transformer 61. The phase adjuster 62 includes a PI (Proportional plus Integral) processor 63 for adjusting the phase $\theta'$ to eliminate the d-axis component Vd' as an error phase difference $\varepsilon$.

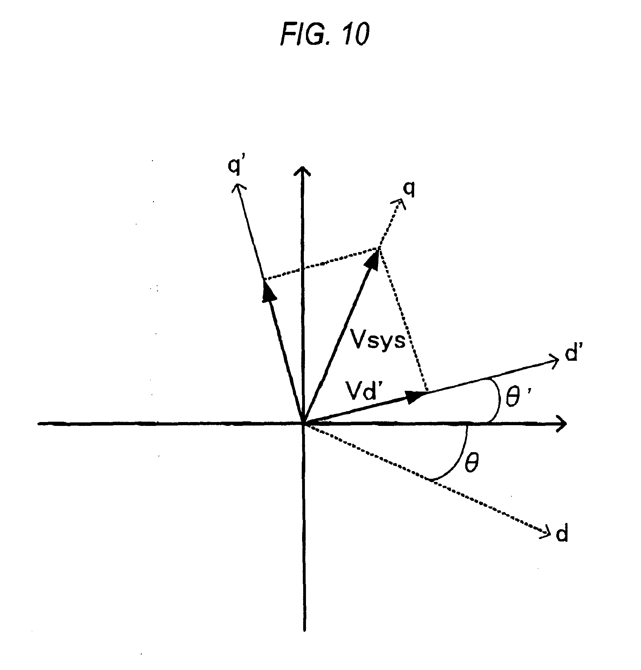

Since the three-phase voltages of the power line 59 are transformed into dq coordinate components that rotate at the angular frequency in the inverter apparatus as shown in FIG. 10, if the phase $\theta'$ (d'-q'-axis) in the inverter apparatus is in full agreement with the phase $\theta$ (d-q-axis) of the three-phase voltage of the power line 59, then the d-axis component Vd' produced by the dq transformation becomes zero because the three-phase voltages Vsys of the power line 59 have only a q-axis component. If there is a phase difference, then a d-axis component Vd' having a magnitude depending on the phase difference is obtained as a calculated result.

Three-phase voltages Vu, Vv, Vw of the power line 59 and a d-axis component Vd and a q-axis component Vq which are produced by the dq transformation are related to each other at the phase $\theta$ according to the following equation (1):

$$\begin{bmatrix} Vd \\ Vq \end{bmatrix} = \sqrt{\frac{2}{3}} \begin{bmatrix} \cos\theta & \cos\left(\theta - \frac{2}{3}\pi\right) & \cos\left(\theta + \frac{2}{3}\pi\right) \\ -\sin\theta & -\sin\left(\theta - \frac{2}{3}\pi\right) & -\sin\left(\theta - \frac{2}{3}\pi\right) \end{bmatrix} \begin{bmatrix} Vu \\ Vv \\ Vw \end{bmatrix}$$

$$\cdots(1)$$

A PI control process is performed to eliminate the d-axis component Vd' (phase difference information) obtained by the dq transformation, thereby obtaining a correction variable $\Delta f$ for the internal phase. The correction variable $\Delta f$ is added to the output reference frequency (e.g., 50 or 60 Hz) of the inverter apparatus for thereby correcting the internal phase $\theta'$. If the d-axis component Vd' is eliminated by this correction, then it means that the internal phase $\theta'$ of the inverter apparatus is in agreement with the phase $\theta$ of the voltage of the power line 59. It is therefore possible to perform the PI phase control for bringing the internal phase $\theta'$ of the inverter apparatus into agreement with the phase $\theta$ of the voltage of the power line 59.

As shown in FIG. 9, the phase adjuster 62 comprises the PI processor 63 for outputting a frequency correction variable $\Delta f$ for eliminating the d-axis component Vd' as an error phase difference $\varepsilon$, a limiter 64 for limiting an output signal from the PI processor 63, an adder 65 for adding an output signal from the limiter 64 to the output reference frequency (e.g., 50 or 60 Hz) f* of the inverter apparatus, an integrator 66 for integrating the sum of the output reference frequency f* and the frequency correction variable $\Delta f$ to output a phase $\theta'$. The phase $\theta'$ is supplied to the dq transformer 61 through a feedback loop, and the three-phase voltages of the power line 59 are transformed into dq coordinate components based on the phase $\theta'$ according to the above equation (1). The feedback-loop processing is repeated to bring the internal phase $\theta'$ of the inverter apparatus into agreement with the phase $\theta$ of the voltage of the power line 59, i.e., to synchronize the output voltage of the inverter apparatus with the voltage of the power line 59.

The phase θ' outputted from the integrator 66 is converted into a sine wave by a θ/sinθ converter 67. The sine wave outputted from the θ/sinθ converter 67 is combined with a voltage signal from the voltage control unit 52 by a combiner 68. The combiner 68 supplies a sine-wave output voltage command value to the pulse width modulator 54, which controls the inverter apparatus to produce an output voltage waveform.

While a first one of the electric power supply apparatuses is activated and outputs electric power, if the output frequency thereof reaches an upper limit value of the limiter 64 or a lower limit value thereof (is divergent in the control process), then the internal phase θ' of a second one of the electric power supply apparatuses cannot be corrected due to the effect of the limiter 64, and the voltages cannot be synchronized in phase.

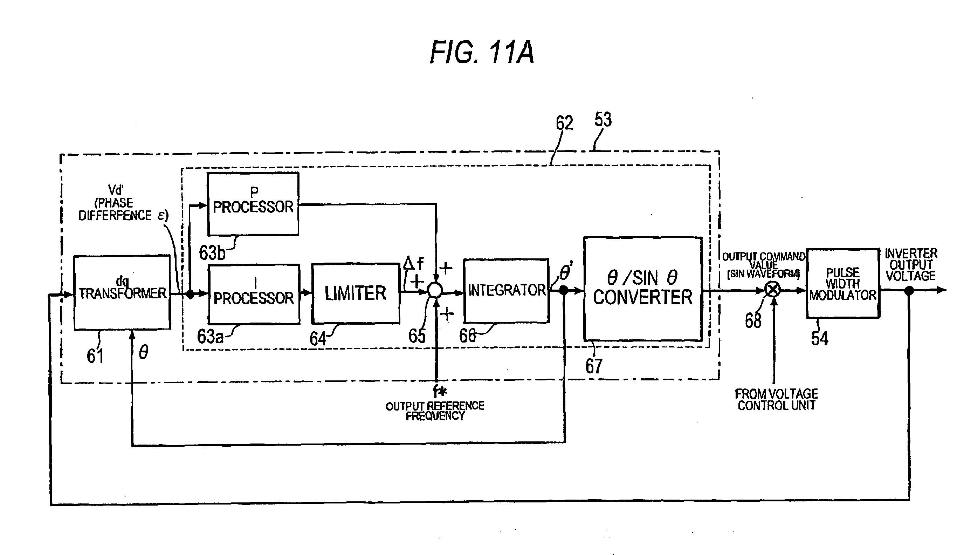

FIG. 11A shows a phase adjuster 62 according to a modification of FIG. 9 which is designed to solve the above problem. The phase adjuster 62 shown in FIG. 11A includes a P (Proportional) processor 63b for outputting a control output signal which is not zero unless the d-axis component Vd' representing an error is zero. The result of the phase correction remains fluctuating, thus improving the effect that the limiter 64 has on the phase correction, i.e., avoiding disabling the phase correction. However, if the gain of the P processor 63b is too large, then the phase correction fluctuation that remains at all times tends to make the output frequency unstable. Therefore, the gain of the P processor 63b needs to be of a value small enough not to affect the output frequency

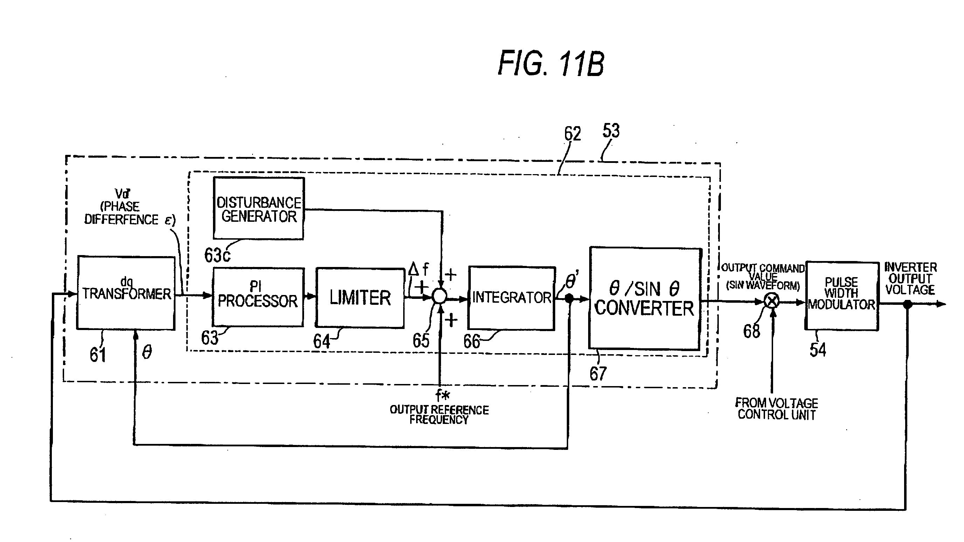

FIG. 11B shows a phase adjuster 62 according to another modification of FIG. 9. The phase adjuster 62 shown in FIG. 11B includes a disturbance generator 63c for generating a predetermined disturbance which will not affect the output of the inverter apparatus. The disturbance generated by the disturbance generator 63c is added to the output signal from the limiter 64 to forcibly fluctuate the result of the phase correction, thus improving the effect that the limiter 64 has on the phase correction, i.e., avoiding disabling the phase correction. If the disturbance generator 63c generates the disturbance in random periods, then it is possible to prevent occurrence of a divergent phenomenon in the control process which would be caused when the inverter apparatuses have their fluctuation periods in agreement with each other.

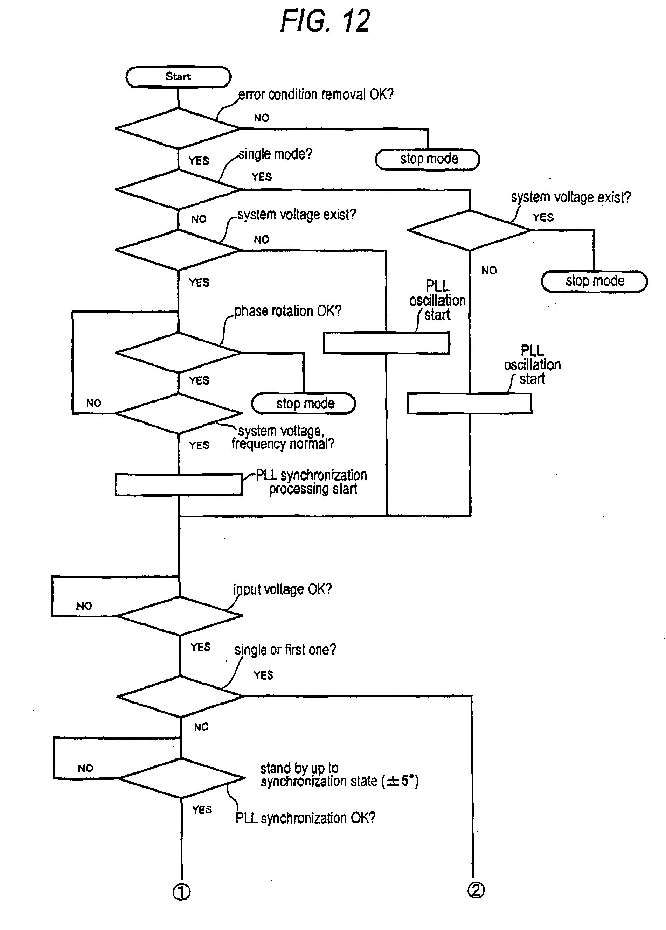

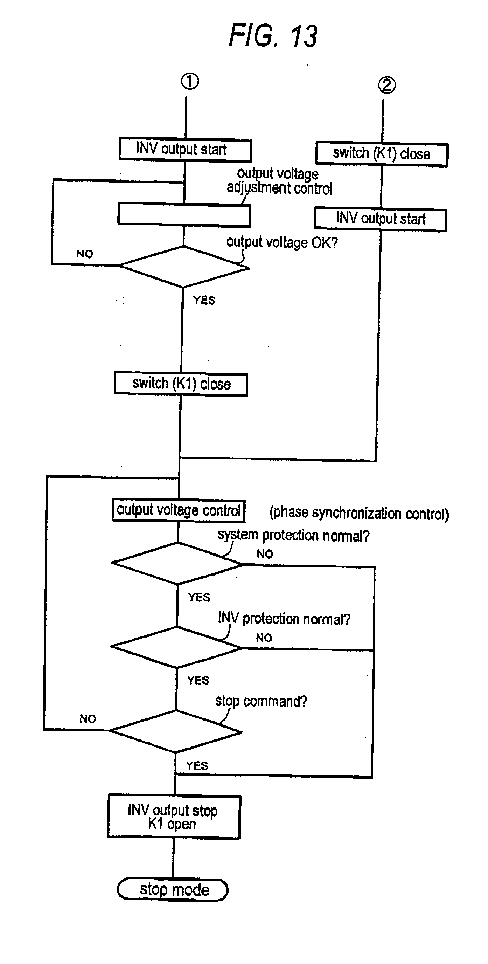

FIGS. 12 and 13 show an operation sequence of the inverter apparatus according to the present invention. The process described above serves to synchronize the internal phase of the inverter apparatus with the phase of the voltage of the power line- However, when a plurality of electric power supply apparatuses operate in the parallel-run mode, the electric power supply apparatus which first starts outputting electric power cannot be activated according to the above process because the voltage of the power line cannot be detected. In this case, a reference frequency (50 or 60 Hz) is set in the internal phase circuit of the inverter apparatus, and the inverter apparatus outputs a voltage at the reference frequency without computing a correction variable Δf, i.e., with Δf being set to zero. After the other electric power supply apparatuses which operate in the parallel-run mode detect the voltage of the ommercial power supply system, they perform the above phase synchronization control process to correct the phase based on the correction variable Δf, and continuously output the electric power while performing the correcting process for the internal phase circuits.

After the first inverter apparatus is activated, when the second and other inverter apparatuses are to start operating in the parallel-run mode, the internal phase of the inverter apparatus and the phase of the detected voltage of the power line 59 are brought into synchronism with each other according to the above phase synchronizing process. After the internal phase of the inverter apparatus and the phase of the detected voltage of the power line 59 are synchronized with each other, the inverter apparatus starts operating in the parallel-run mode. For example, the parallel operation is not performed, until the difference between the internal phase of the inverter apparatus and the phase of the detected voltage of the power line 59 becomes $\pm$ 5° or less, for example. When the phase difference reaches $\pm$ 5° or less, it is judged that the synchronization is established, and a switch K1 (see FIG. 7) is closed to start the parallel operation.

After the inverter apparatuses are activated in the manner described above, if one of the inverter apparatuses is to be shut down while the inverter apparatuses are being operated in the parallel-run mode, since no interlinked control process is performed between the inverter apparatuses, only the output of electric power from the inverter apparatus to be shut down should be stopped. The inverter apparatuses other than the inverter apparatus which is shut down can continuously be operated while keeping synchronization.

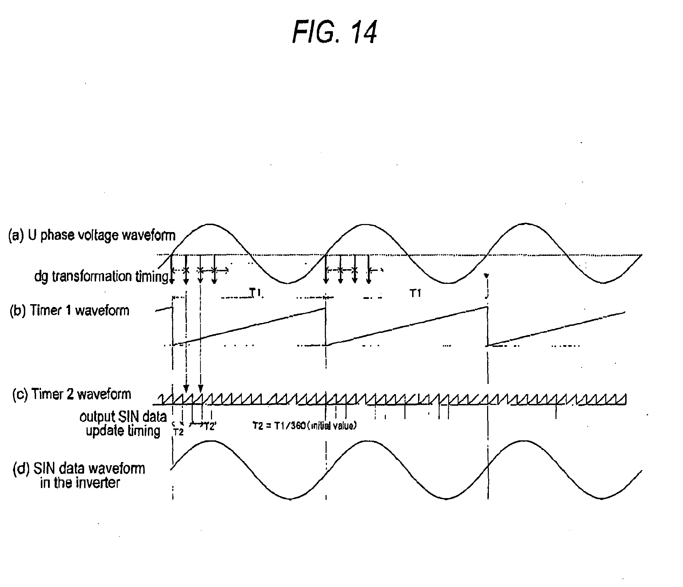

With the above arrangement, it is possible to synchronize the output voltages of the inverter apparatuses in phase with each other without the need for sharing information between the inverter apparatuses that operate in the parallel-run mode. If the above synchronization control process is performed using a microcomputer, for example, it may be carried out according to a timing sequence shown in FIG. 14. Specifically, when an initially activated inverter apparatus outputs a voltage at a reference frequency alone, the time of one cycle at the reference frequency is set in a timer 1 for managing the internal phase of the inverter apparatus, and the time of 1/360 of one cycle at the reference frequency is set in a timer 2. The inverter apparatus outputs a sine wave shown at (d) in FIG. 14 by incrementing a pointer for referring to an output SIN table (which stores output data in one cycle, e.g., 360 data in this example) of the inverter apparatus in each time being up in the timer 2.

For synchronizing the internal phase of the second inverter apparatus or other inverter apparatuses with the phase of the voltage of the power line which has been established by the already activated inverter apparatus, the time T2 of 1/360 of one cycle at the reference frequency as an initial value is set in the timer 2. Then, the three-phase voltages shown at (a) in FIG. 14, which are detected by the voltage detector at each given time, of the power line are transformed by dq-transformation at the internal phase (pointer value) managed by the timer 2, thus determining a d-axis component Vd'. In the example shown in FIG. 14, the dq-transformation is performed at intervals of 1 msec- A PI process is carried out to eliminate the d-axis component Vd' determined by the dq-transformation to output a correction variable Δf. The correction variable △f is added to or subtracted from the value set in the timer 2 shown at (c) in FIG. 14, thereby correcting the time of 1/360 of one cycle at the reference frequency which is set in the timer 2, i.e., setting T2' in the timer 2. The above correcting process is repeated to synchronize the phase of the voltage of the power line and the internal phase of the inverter apparatus with each other.

According to the present invention, as described above, when the plural inverter apparatuses are connected in parallel, the output voltages of the inverter apparatuses can be synchronized in phase with each other by simply connecting the inverter apparatuses without the need for any special signal lines for synchronizing the output voltages of the parallel-connected inverter apparatuses in phase with each other. Specifically, the phases of the output voltages of the inverter apparatuses can be synchronized only by connecting the output terminals of the inverter apparatuses in parallel. Therefore, the number of signal lines or wires used can be reduced, and the electric power supply system is prevented from being shut down due to a synchronizing line disconnection or a master unit failure. Since the inverter apparatuses that are operated in the voltage-controlled mode can be synchronized with each other by using the voltage of the power line, a plurality of inverter apparatuses of different kinds and types can easily be operated synchronously in the parallel-run mode. Furthermore, the inverter apparatuses can be synchronized in phase with each other even if the frequency of the voltage of the power line is the same as the limit value of the limiter.

Since the dq transformer 61 and the phase adjuster 62 can easily be composed of a microprocessor, the electric power supply system can be constructed using the existing hardware including microprocessors, voltage detectors, etc. Thus, the electric power supply system can be constructed at low cost as it requires no new hardware.

In the above embodiments, a plurality of unitized electric power supply apparatuses, each of which comprises a distributed power generator and an inverter apparatus, are operated in the parallel-run mode. However, the present invention is also applicable to a system including a common DC power supply and a plurality of inverter apparatuses connected thereto and operable in the parallel-run mode.

Although certain preferred embodiments of the present invention have been shown and described in detail, it should be understood that various changes and modifications may be made therein without departing from the scope of the appended claims.

## Claims

1. An electric power supply apparatus comprising :

   an electric generator;
   a power converter for converting electric power generated by said electric generator into AC electric power having a predetermined frequency and a predetermined voltage; and
   a controller of said power converter including a control unit having output voltage vs. output current characteristics for determining an output voltage corresponding to an output current of said power converter;
   said output voltage vs. output current characteristics having a first dropping characteristic for causing output electric power of said electric generator to be limited, between a first output current exceeding a power generation capability of said electric generator and a second output current exceeding a power converting capability of said power converter.

2. An electric power supply apparatus according to claim 1, further comprising:

   a device for detecting a power generation capability of said electric generator; and
   a device for setting said first dropping characteristic for causing said output electric power of said electric generator to be limited based on the detected power generation capability.

3. An electric power supply apparatus according to claim 1, wherein said electric generator comprises a gas turbine generator; and an exhaust gas temperature or an inlet air temperature of said gas turbine generator is detected and said first dropping characteristic is set based on the detected temperature.

4. An electric power supply apparatus according to claim 1, wherein said output voltage vs. output current characteristics has a second dropping characteristic, which is different from said dropping characteristic curve, for causing the output voltage to be lowered as the output current increases, when said output current is not more than said first output current, and a third dropping characteristic, which is different from said first dropping characteristic and said second dropping characteristic, for causing the output voltage to be lowered as the output current increases, when said output current is not less than said second output current.

**5.** An electric power supply apparatus according to claim 1, wherein said output voltage vs. output current characteristics has a second dropping characteristic for causing the output voltage to be limited to a constant value as the output current increases, when said output current is not more than said first output current, and a third dropping characteristic, which is different from said first dropping characteristic, for causing the output voltage to be lowered as the output current increases, when said output current is not less than said second output current.

**6.** A method of synchronously operating a plurality of power converters connected in parallel in a system for supplying three-phase AC electric power to a load, comprising:

detecting three-phase voltages of a power line to which said power converters are connected;
transforming the detected three-phase voltages into dq-coordinate components based on an internal phase θ' of each of said power converters to detect a d-axis component Vd';
performing a PI control process to make said d·axis component Vd' zero and outputting a correction variable Δf for the internal phase θ';
adding said correction variable Δf to an output reference frequency f* of said power converter and also adding a predetermined fluctuation frequency to said correction variable △f to bring said internal phase θ' into agreement with a voltage phase θ of said power line; and
controlling said power converter to generate a sine-wave. AC voltage based on said internal phase θ' and to synchronize with said three-phase voltages of said power line.

**7.** A method according to claim 6, wherein said predetermined fluctuation frequency is represented by an output value from a proportional control unit.

**8.** A method according to claim 6, wherein said predetermined fluctuation frequency is represented by an output frequency from a disturbance generator.

**9.** A power converter for use in an electric power supply system comprising a plurality of power converters connected in parallel for supplying three-phase AC electric power to a load, said power converter comprising:

a voltage detector for detecting three-phase voltages of a power line to which said power converters are connected;
a processor for transforming the detected three-phase voltages detected by said voltage detector into dq-coordinate components based on an internal phase θ' of each of said power converters to detect a d-axis component Vd';
a PI processor for making said d-axis component Vd' zero as an error phase difference e and outputting a correction variable △f for the internal phase θ';
a limiter for limiting an output of said PI processor;
a fluctuation frequency generator for generating a predetermined fluctuation frequency;
an adder for adding an output of said limiter, an output reference frequency f* of said power converter, and an output of said fluctuation frequency generator to each other; and
an integrator for integrating an output from said adder and outputting said internal phase θ';

wherein said power converter outputs a sine-wave AC voltage in synchronism with said three-phase voltages of said power line based on said internal phase θ' which is in agreement with a voltage phase θ of said power line.

**10.** A power converter according to claim 9, wherein said fluctuation frequency generator comprises a proportional control unit.

**11.** A power converter according to claim 9, wherein said fluctuation frequency generator comprises a disturbance generator for outputting said predetermined fluctuation frequency.

**12.** A power converter for use in an electric power supply system comprising a plurality of power converters connected in parallel for supplying three-phase AC electric power to a load, said power converter comprising:

a voltage detector for detecting three-phase voltages of a power line to which said power converters are connected; and
a switch for connecting said power converter to said power line;

wherein if said voltage detector detects no voltage of said power line, said switch is closed to output an AC voltage having a reference frequency from said power converter; and
if said voltage detector detects the three-phase voltages of the power line, a phase of a voltage of said power converter is adjusted into agreement with a phase of said three-phase voltages of said power line, and if the difference between said phase of said voltage of said power converter and said phase of said three-phase voltages of said power line falls in a predetermined value, said switch is closed.

## FIG. 1

ELECTRIC GENERATOR

ELECTRIC POWER ·SENSOR SIGNALS

PULSE WIDTH MODULATOR

VOLTAGE CONTROL UNIT

VOLTAGE COMMAND COMPUTING UNIT

CONTROL UNIT

CURRENT DETECTOR

POWER DETECTOR

VOLTAGE DETECTOR

CURRENT DETECTION

VOLTAGE DETECTION

TO OTHER UNIT

# FIG. 2

```
┌─────────────────────────┐
│    ELECTRIC POWER       │
│  SUPPLY APPARATUS 1     │──┐
└─────────────────────────┘  │
                    ~10       │
┌─────────────────────────┐  │
│    ELECTRIC POWER       │  │
│  SUPPLY APPARATUS 2     │──┤
└─────────────────────────┘  │
                    ~10       │
            ┊                 │
            ┊                 │
            ┊                 │
┌─────────────────────────┐  │
│    ELECTRIC POWER       │  │
│  SUPPLY APPARATUS N     │──┘
└─────────────────────────┘
                    ~10
```

ELECTRIC POWER SUPPLY APPARATUS 1 ~10

ELECTRIC POWER SUPPLY APPARATUS 2 ~10

ELECTRIC POWER SUPPLY APPARATUS N ~10

LOAD

30~

## FIG. 3

OUTPUT VOLTAGE

V0
V1
V2

0  A  B  OUTPUT CURRENT

INTERVAL 1  INTERVAL 2  INTERVAL 3

## FIG. 4

OUTPUT VOLTAGE

V0
V2

0  A  B  OUTPUT CURRENT

INTERVAL 1  INTERVAL 2  INTERVAL 3

*FIG. 5*

*FIG. 6*

# FIG. 7

# FIG. 8

| ELECTRIC POWER SUPPLY APPARATUS 1 | ~40 | | LOAD |
| ELECTRIC POWER SUPPLY APPARATUS 2 | ~40 | 60~ | |
| ⋮ | | | |
| ELECTRIC POWER SUPPLY APPARATUS N | ~40 | | |

FIG. 9

FIG. 10

FIG. 11A

EP 1 860 750 A2

FIG. 11B

EP 1 860 750 A2

## FIG. 12

```
        ┌─────────┐
        │  Start  │
        └─────────┘
             │
             │        error condition removal OK?
           ◇ ─────────────── NO ──────────────┐
           YES    single mode?                 │
             │         ┌── YES ──┐        ┌──────────┐
           ◇ ─────────────┐      └────────│ stop mode│
           NO   system voltage exist?     └──────────┘
             │                                    system voltage exist?
           ◇ ── NO ──┐                    ◇ ──────── YES ──────┐
           YES        │                   NO                   │
             │        │              PLL              ┌──────────┐
             │        │              oscillation      │ stop mode│
             │        │              start            └──────────┘
             │  phase rotation OK?    ┌─────────┐
  ┌───────── ◇ ───────────┐          └─────────┘     PLL
  │ NO      YES            │                          oscillation
  │          │    ┌──────────┐                        start
  │        ◇ ─────│ stop mode│                  ┌──────────┐
  │        YES    └──────────┘                  └──────────┘
  │  system voltage,
  │  frequency normal?
  │  ┌─────────────┐    PLL synchronization
  └──│             │    processing start
     └─────────────┘
             │
             │        input voltage OK?
  ┌───────── ◇
  │ NO      YES    single or first one?
  │          │         ┌── YES ──────────────┐
  │        ◇ ──────────┘                      │
  │        NO                                 │
  │  ┌───── │                                 │
  │  │ NO   │   stand by up to                │
  │  │    ◇ ─── synchronization state (±5°)   │
  │  │    YES   PLL synchronization OK?        │
           │                                   │
          ①                                   ②
```

# FIG. 13

①             ②

INV output start        switch (K1) close

output voltage
adjustment control

INV output start

NO

output voltage OK?

YES

switch (K1) close

output voltage control    (phase synchronization control)

system protection normal?

NO

YES

INV protection normal?

NO

YES

stop command?

NO

YES

INV output stop
K1 open

stop mode

# FIG. 14

(a) U phase voltage waveform

dg transformation timing

(b) Timer 1 waveform

T1.      T1

(c) Timer 2 waveform

output SIN data
update timing   T2    T2'    T2 = T1/360 (initial value)

(d) SIN data waveform
in the inverter

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3014931 U

- WO 2004019466 A